# EUROPEAN PATENT APPLICATION

(11) **EP 3 845 402 A1**
(43) Date of publication of application: **07.07.2021**
(21) Application number: 21150277.8
(22) Date of filing: 05.01.2021
(51) Int. Cl.: B60H 1/00, B60H 1/22, B60H 1/32

(54) **HEAT PUMP DEVICE FOR ELECTRIC VEHICLE**

(30) Priority: 06.01.2020 KR 20200001378
(71) Applicant: LG Electronics, Inc., Yeongdeungpo-gu Seoul 07336 (KR)
(72) Inventor: LEE, Jooseong, 08592 Seoul (KR); CHOI, Inho, 08592 Seoul (KR); KIM, Kyunghwan, 08592 Seoul (KR)
(74) Representative: Ter Meer Steinmeister & Partner

(57) **Abstract**

The present disclosure relates to a heat pump device for an electric vehicle, and more particularly, to a heat pump device that constitute three types of independent refrigerant cycle in which three different types of refrigerant flow respectively, and disposes a first heat exchange unit and a second heat exchange unit in which the refrigerants exchange heat with each other, in the refrigerant cycle, thereby performing an integrated heat management of an indoor space, a battery, and a driving module.

## Description

### BACKGROUND OF THE INVENTION

### 1. Field of the invention

The present disclosure relates to a heat pump device for an electric vehicle, and more particularly, to a heat pump device that performs an integrated heat management of an indoor space, a driving module, and a battery.

### 2. Description of the Related Art

An electric vehicle is a transportation means that uses electricity supplied from a battery as a power source.

A driving module for operating an electric vehicle by receiving electricity from the battery is mounted in the front body and the rear body of the electric vehicle, and the battery and the driving module are a heating device such that the temperature increases during operation.

However, the excessive temperature increase of the battery and the driving module is directly related to the deterioration of the performance of the electric vehicle, and a cooling device for solving this problem is essentially installed in the battery and the driving module of the electric vehicle.

The cooling device generally cools the battery and the driving module by heat-exchanging with the battery and the driving module by branching a refrigerant passage or an air passage, in a refrigerant cycle of a general air conditioner composed of a compressor, an outdoor unit, an expansion valve, and an indoor unit.

Further, in addition to the cooling device, it was necessary to be equipped with a defrosting device for removing frost on an outdoor unit in winter and a battery preheating device for preventing the battery charging efficiency from being reduced due to low external temperature.

Prior art KR Application No. 1020150117282 discloses a method of cooling a battery by branching a portion of the cold air supplied to the room in winter in the battery direction for cooling the battery, but there was a problem that cooling is unstable because the battery is cooled by using the cold air as a heat source.

In the prior art European registered patent EP2972019B1, cooling itself can be stably performed because a refrigerant loop is configured to cool the battery and the driving module. However, since the battery and the driving module are interconnected with an outdoor unit and an indoor space, there is a problem that it is dependent on the heating/cooling mode of the indoor space because an independent refrigerant loop cannot be configured. In addition, since the refrigerant cycle must be circulated in the reverse direction for a winter defrosting operation, there is a problem that the heating efficiency is lowered and the battery preheating is impossible due to the unidirectional circulation of the refrigerant cycle.

### SUMMARY OF THE INVENTION

The present disclosure has been made in view of the above problems, and provides a refrigerant loop for cooling and heating an indoor space, a refrigerant loop for cooling and heating a battery, and a refrigerant loop for cooling a driving module, and installs a first heat exchange unit and a second heat exchange unit that allow to achieve a heat exchange between refrigerants flowing through each refrigerant loop, so that the integrated heat management of the indoor space, the battery, and the driving module can be accomplished.

The present disclosure further provides a refrigerant loop for cooling and heating an indoor space, a refrigerant loop for cooling and heating a battery, and a refrigerant loop for cooling a driving module that are configured independently, so that the cooling and heating of the battery and the driving module can be independently implemented without depending on the heating and cooling of the indoor space, while changing the types of refrigerant flowing through each refrigerant loop.

The present disclosure further provides a refrigerant loop for cooling and heating an indoor space, a refrigerant loop for cooling and heating a battery, and a refrigerant loop for cooling a driving module that are configured independently, so that the defrosting operation can be performed in the winter without circulating a refrigerant cycle in the reverse direction, and battery preheating can be accomplished.

The object is solved by the features of the independent claims. Preferred embodiments are given in the dependent claims.

In order to achieve the above object, a heat pump device of an electric vehicle according to an embodiment of the present disclosure includes a compressor in which the first fluid flows and which is connected to each other to form a closed loop; an indoor heat exchange unit; a first expansion valve; a first heat exchange unit; a second heat exchange unit installed in a flow path that is branched between the compressor and the indoor heat exchange unit and merges between the first heat exchange unit and the first expansion valve; and a switching valve connected to the compressor, the indoor heat exchange unit, and the first heat exchange unit, wherein the first heat exchange unit heat-exchanges a second fluid that selectively flows a radiator or a driving module with the first fluid, and the second heat exchange unit heat-exchanges a third fluid that selectively flows a battery with the first fluid.

The first heat exchange unit may be connected to the radiator to be composed of the first heat exchange unit and the radiator, and may constitute an independent refrigerant cycle through which the second fluid flows.

A first three-way valve may be installed in the inlet side of the radiator, and a second three-way valve may be installed in the outlet side.

The loop of the independent refrigerant cycle composed of the first heat exchange unit and the radiator may include a driving module.

The second heat exchange unit may be connected to a battery to be composed of the second heat exchange unit and the battery, and may constitute an independent refrigerant cycle through which the third fluid flows.

The loop of the independent refrigerant cycle composed of the second heat exchange unit and the battery may include a pump that extrudes the third fluid.

A second expansion valve for expanding the first fluid may be disposed in a flow path connected to the second heat exchange unit among flow paths branched between the first heat exchange unit and the first expansion valve.

Preferably, a switching valve may be coupled to the compressor, the indoor heat exchanger, and the first heat exchanger.

Preferably, the heat pump device may further comprise a pump disposed between the battery and the second heat exchanger and extruding the third fluid.

Preferably, the battery may be selectively cooled or heated according to a flow of the first fluid.

Preferably, the heat pump device may further comprise a second expansion valve disposed between the first heat exchanger and the second heat exchanger.

Preferably, the battery may be coupled to the second heat exchanger to form a closed loop through which the third fluid flows.

Preferably, the battery may be cooled when the first fluid flows from the second expansion valve to the second heat exchanger.

Preferably, the battery may be heated when the first fluid flows from the second heat exchanger to the second expansion valve.

Preferably, the first heat exchanger may heat-exchange the first fluid with a second fluid selectively flowed to at least one of a radiator and a driving module.

Preferably, the radiator may be coupled to the first heat exchanger to form a closed loop through which the second fluid flows.

Preferably, the second fluid may absorb heat from the first fluid in the first heat exchanger, and/or may discharge heat from the radiator to an outside environment.

Preferably, the heat pump device may further comprise a first three-way valve disposed at an inlet side of the radiator.

Preferably, the heat pump device may further comprise a second three-way valve disposed at an outlet side of the radiator.

Preferably, the driving module may be coupled to the first three-way valve and the second three-way valve.

Preferably, the indoor heat exchanger may comprises a heater to supply heat to an interior of an electric vehicle.

### BRIEF DESCRIPTION OF THE DRAWINGS

The above and other objects, features and advantages of the present disclosure will be more apparent from the following detailed description in conjunction with the accompanying drawings, in which:
FIG. 1 is a view schematically showing a vehicle body of an electric vehicle according to an embodiment of the present disclosure;
FIG. 2 schematically shows a sub-structure of an electric vehicle according to an embodiment of the present disclosure;
FIG. 3 is a configuration diagram of a refrigerant cycle of a heat pump device according to embodiments of the present disclosure;
FIG. 4 is a view schematically showing a flow of a refrigerant of an embodiment of the present disclosure;
FIG. 5 is a view schematically showing a flow of a refrigerant according to another embodiment of the present disclosure;
FIG. 6 is a view schematically showing a flow of a refrigerant according to another embodiment of the present disclosure;
FIG. 7 is a view schematically showing a flow of a refrigerant according to another embodiment of the present disclosure;
FIG. 8 is a view schematically showing a flow of a refrigerant according to another embodiment of the present disclosure;
FIG. 9 is a view schematically showing a flow of a refrigerant according to another embodiment of the present disclosure;
FIG. 10 is a view schematically showing a flow of a refrigerant according to another embodiment of the present disclosure; and
FIG. 11 is a view schematically showing a flow of a refrigerant according to another embodiment of the present disclosure.

### DETAILED DESCRIPTION OF THE PREFERRED EMBODIMENTS

Advantages and features of the present disclosure and methods for achieving them will be made clear from the embodiments described below in detail with reference to the accompanying drawings. The present disclosure may, however, be embodied in many different forms and should not be construed as being limited to the embodiments set forth herein. Rather, these embodiments are provided so that this disclosure will be thorough and complete, and will fully convey the scope of the invention to those skilled in the art. The present disclosure is defined only by the scope of the claims. Like reference numerals refer to like elements throughout the specification.

A first fluid used in embodiments of the present disclosure may use a first refrigerant 10f, a second fluid may use a second refrigerant 20f, and a third fluid may use a third refrigerant 30f.

Hereinafter, the present disclosure will be described with reference to drawings for describing a heat pump device of an electric vehicle according to embodiments of the present disclosure.

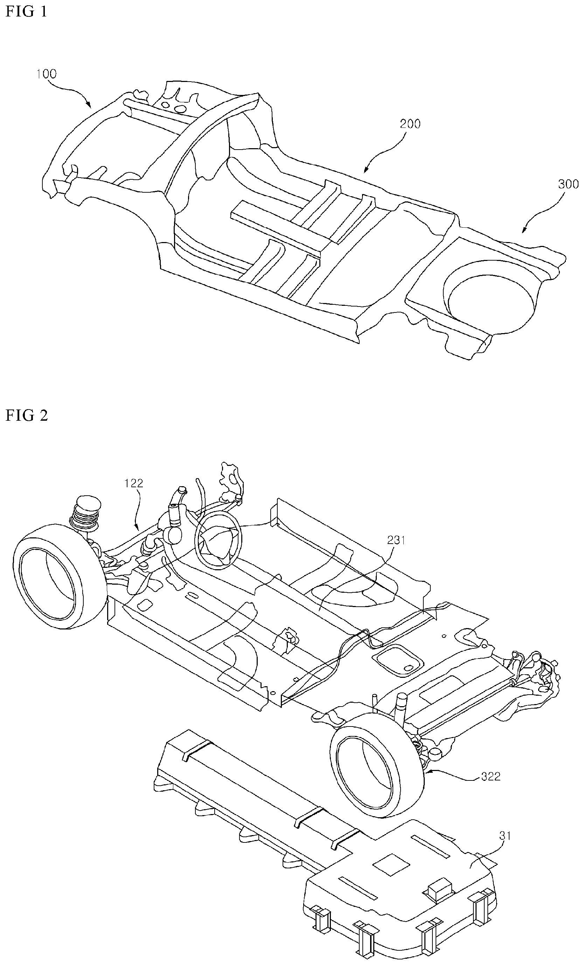

Referring to FIGS. 1 and 2, an electric vehicle is transportation means that uses electricity supplied from a battery 31 as a power source.

The electric vehicle transmits the supplied electricity to a power transmission device, and moves the electric vehicle by driving a driving module 22 including a steering device, a suspension device, and a braking device using the received electricity.

The body of the electric vehicle includes a front body 100, a central body 200, and a rear body 300. At this time, the battery 31 that supplies electricity is located inside a tunnel 231 of the central vehicle body 200, and supplies electricity to the driving module 122 and 322.

A front driving module 122 is disposed in the front body 100 of the electric vehicle, and a rear driving module 322 is disposed in the rear body 300 to control the movement of the electric vehicle.

An indoor space in which a driver can board and an operating device for electric vehicle is disposed is formed in the central body 200.

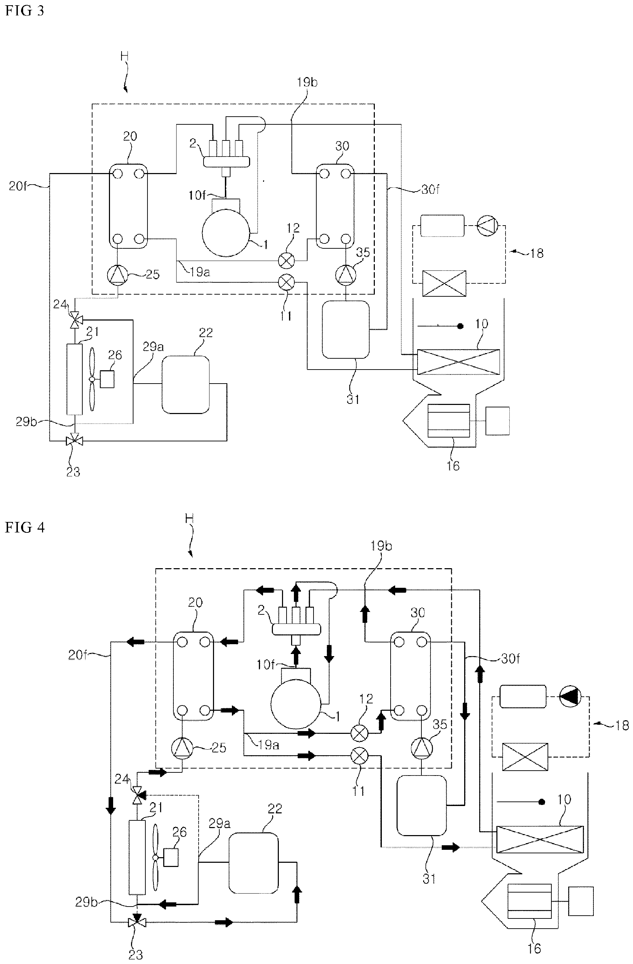

Referring to FIG. 3, it is possible to schematically check the heat pump device of the electric vehicle for integrally performing heat management of the indoor space, the battery 31 and the driving module 22.

The heat pump device includes a compressor 1, an indoor heat exchange unit 10, a first heat exchange unit 20, a second heat exchange unit 30, a first expansion valve 11, a radiator 21, a driving module 22, a switching valve 2, and a battery 31.

The heat pump device includes a flow path connecting the compressor 1 and the switching valve 2, the switching valve 2 and the first heat exchange unit 20, the first heat exchange unit 20 and the first expansion valve 11, the first expansion valve 11 and the indoor heat exchange unit 10, the indoor heat exchange unit 10 and the switching valve 2, the first heat exchange unit 20 and the radiator 21, the radiator 21 and the first heat exchange unit 20, the first heat exchange unit 20 and the driving module 22, and the second heat exchange unit 30 and the battery 31.

Any one of the first refrigerant 10f, the second refrigerant 20f, and the third refrigerant 30f may flow in the flow path included in the heat pump device.

The first refrigerant 10f may flow through a flow path connecting the compressor 1 and the switching valve 2, the switching valve 2 and the first heat exchange unit 20, the first heat exchange unit 20 and the first expansion valve 11, the first expansion valve 11 and the indoor heat exchange unit 10, and the indoor heat exchange unit 10 and the switching valve 2.

The high temperature and high pressure first refrigerant 10f compressed by the compressor 1 may flow from the switching valve 2 to the first heat exchange unit 20 according to the opening degree of the switching valve 2, and may flow from the switching valve 2 to the indoor heat exchange unit 10.

The second refrigerant 20f may flow through a flow path connecting the first heat exchange unit 20 and the radiator 21, the radiator 21 and the first heat exchange unit 20, and the first heat exchange unit 20 and the driving module 22.

The third refrigerant 30f may flow through a flow path connecting the second heat exchange unit 30 and the battery 31.

Heat exchange between the first refrigerant 10f and the second refrigerant 20f may be performed in the first heat exchange unit 20, and heat exchange between the first refrigerant 10f and the third refrigerant 30f may be performed in the second heat exchange unit 30.

A first branch point 19a may be formed in a flow path connecting the first heat exchange unit 20 and the first expansion valve 11, and a second branch point 19b may be formed in a flow path connecting the switching valve 2 and the indoor heat exchange unit 10.

The first refrigerant 10f may or may not flow to the indoor heat exchange unit 10 according to the opening degree of the first expansion valve 11.

The flow path through which the first refrigerant 10f flows may form a flow path that is branched at the first branch point 19a and the second branch point 19b and connected to the second heat exchange unit 30, and a second expansion valve 12 may be disposed in a flow path connecting the first branch point 19a and the second heat exchange unit 30.

The first refrigerant 10f may or may not flow to the second heat exchange unit 30 according to the opening degree of the second expansion valve 12.

A first three-way valve 23, a second three-way valve 24, and a first pump 25 may be disposed in a flow path connecting the first heat exchange unit 20 and the radiator 21, and the driving module 22 may be connected to the first three-way valve 23 and the second three-way valve 24, respectively.

A third branch point 29a may be formed in a flow path connecting the driving module 22 and the second three-way valve 24, and a fourth branch point 29b may be formed in a flow path connecting the radiator 21 and the first three-way valve 23.

The second refrigerant 20f may flow through a flow path connecting the third branch point 29a and the fourth branch point 29b.

Depending on the opening degree of the first three-way valve 23 and the second three-way valve 24, the second refrigerant 20f may flow through a flow path that forms a closed loop having the first heat exchange unit 20, the first three-way valve 23, the radiator 21, the second three-way valve 24, the first pump 25, and the first heat exchange unit 20 that are connected in this order, may flow through a flow path that forms a closed loop having the first heat exchange unit 20, the first three-way valve 23, the driving module 22, the third branch point 29a, the fourth branch point 29b, the radiator 21, the second three-way valve 24, the first pump 25, and the first heat exchange unit 20 that are connected in this order, and may flow through a flow path that forms a closed loop having the first heat exchange unit 20, the first three-way valve 23, the driving module 22, the third branch point 29a, the second three-way valve 24, the first pump 25, and the first heat exchange unit 20 that are connected in this order.

An outdoor fan 26 may be installed to be spaced apart from the radiator 21, and the second refrigerant 20f passing through the radiator 21 may be condensed due to the driving of the outdoor fan 26.

The second refrigerant 20f may be extruded by the first pump 25 and flow to the first heat exchange unit 20.

A second pump 35 for extruding the third refrigerant 30f may be disposed in a flow path connecting the second heat exchange unit 30 and the battery 31.

The third refrigerant 30f may or may not flow through a flow path that forms a closed loop having the second heat exchange unit 30, the battery 31, the second pump 35, and the second heat exchange unit 30 that are connected in this order, according to the driving state of the second pump 35.

The flow path through which the first refrigerant 10f flows, the flow path through which the second refrigerant 20f flows, and the flow path through which the third refrigerant 30f flows may form a different independent closed loop.

Depending on the opening state of the switching valve 2, the first expansion valve 11, the second expansion valve 12, the first three-way valve 23, and the second three-way valve 24, and on whether the second pump 35 is driven, the first refrigerant 10f, the second refrigerant 20f, and the third refrigerant 30f may have a different flow, a different flow direction, and a different heat entry and exit form. Accordingly, the cooling or heating of the battery 31, the driving module 22, the radiator 21, and the indoor space may be selectively performed.

The indoor fan 16 may be installed to be spaced apart from the indoor heat exchange unit 10, and the first refrigerant 10f passing through the indoor heat exchange unit 10 may be condensed due to the operation of the indoor fan 16.

An indoor heater 18 may be installed in the indoor space of the electric vehicle, and the indoor space may be supplied with heat due to the driving of the indoor heater 18.

Hereinafter, various embodiments of the present disclosure will be described with reference to FIGS. 4 to 11.

The flow of refrigerant in a cooling mode of the indoor space cooling, the driving module 22, and the battery 31 will be described with reference to FIG. 4.

The first refrigerant 10f of high temperature and high pressure compressed by the compressor 1 in the cooling mode of the indoor space, the driving module 22, and the battery 31 passes through the switching valve 2 and flows into the first heat exchange unit 20, and the the first expansion valve 11 and the second expansion valve 12 are operated at an opening degree for expanding the refrigerant.

The first three-way valve 23 closes the flow path connected to the fourth branch point 29b, the second three-way valve 24 closes the flow path connected to the third branch point 29a, and the second pump 35 is operated in a driving state and the third refrigerant 30f extruded by the second pump 35 flows through the flow path.

The first refrigerant 10f of high temperature and high pressure that passed through the switching valve 2 is condensed by discharging heat to the second refrigerant 20f while passing through the first heat exchange unit 20, and reaches the first branch point 19a and then is branched.

The first refrigerant 10f, which is branched and flows into the first expansion valve 11, expands while passing through the first expansion valve 11, flows into the indoor heat exchange unit 10, absorbs heat from the indoor air, evaporates, and then flows back into the compressor 1 via the switching valve 2.

The first refrigerant 10f, which is branched and flows into the second expansion valve 12, expands while passing through the second expansion valve 12, flows into the second heat exchange unit 30, absorbs heat from the third refrigerant 30f, evaporates, and then converges with the first refrigerant 10f flowed through the indoor heat exchange unit 10 at the second branch point 19b.

The second refrigerant 20f, which absorbs heat from the first refrigerant 10f in the first heat exchange unit 20 and evaporates, flows into the driving module 22 through the first three-way valve 23 and absorbs heat from the driving module 22 to evaporate once again, and then flows into the fourth branch point 29b.

The second refrigerant 20f that reached the fourth branch point 29b flows into the radiator 21, discharges heat to the outside to be condensed, and then flows into the first pump 25 via the second three-way valve 24, and is extruded by the first pump 25 to flow into the first heat exchange unit 20 again.

The third refrigerant 30f condensed by discharging heat from the second heat exchange unit 30 to the first refrigerant 10f flows into the battery 31, absorbs heat from the battery 31, evaporates, and is extruded by the second pump 35 and flows into the second heat exchange unit 30 again.

In this process, the indoor air is cooled by the first refrigerant 10f that absorbs the heat of the indoor air in the indoor heat exchange unit 10, the driving module 22 is cooled by the second refrigerant 20f that absorbs heat from the driving module 22, and the battery 31 is cooled by the third refrigerant 30f that absorbs heat from the battery 31.

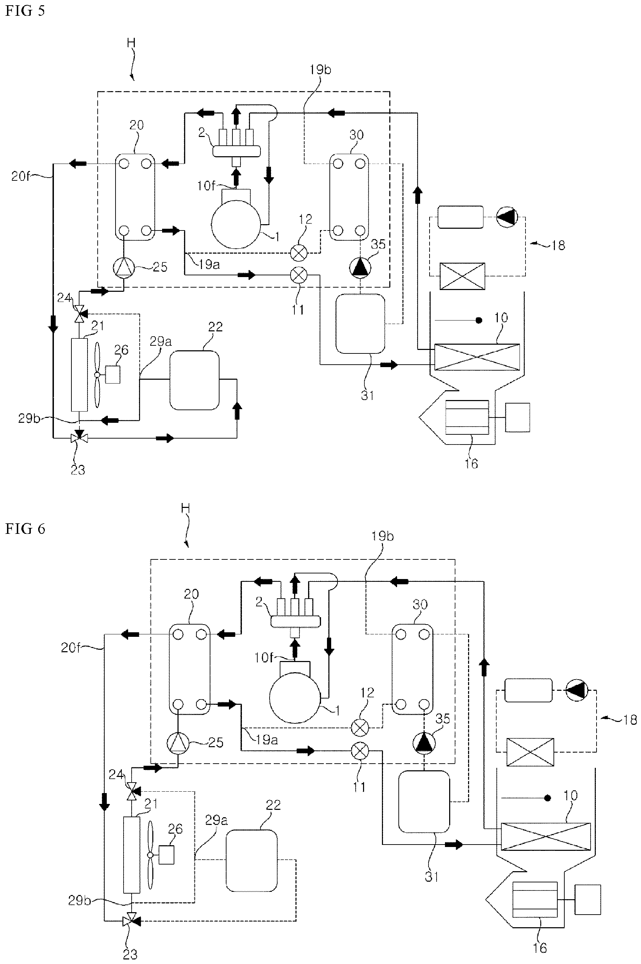

FIG. 5 is a view schematically showing a flow of a refrigerant according to another embodiment of the present disclosure.

In the cooling mode of the indoor space cooling and driving module 22, the first refrigerant 10f of high temperature and high pressure compressed by the compressor 1 flows into the first heat exchange unit 20 through the switching valve 2, the first expansion valve 11 is operated at an opening degree for expanding the refrigerant, while the second expansion valve 12 is closed. Accordingly, all of the first refrigerant 10f that reached the first branch point 19a flows into the indoor heat exchange unit 10.

The first three-way valve 23 closes the flow path connected to the fourth branch point 29b, the second three-way valve 24 closes the flow path connected to the third branch point 29a, and the second pump 35 is operated in a stop state such that the third refrigerant 30f does not flow through the flow path.

The first refrigerant 10f of high temperature and high pressure that passed through the switching valve 2 is condensed by discharging heat to the second refrigerant 20f while passing through the first heat exchange unit 20, and reaches the first branch point 19a, and then all flows into the first expansion valve 11.

The first refrigerant 10f flowed into the first expansion valve 11 expands while passing through the first expansion valve 11, flows into the indoor heat exchange unit 10, absorbs heat from indoor air, evaporates, and then flows into the compressor 1 again via the switching valve 2.

The second refrigerant 20f, which absorbs heat from the first refrigerant 10f in the first heat exchange unit 20 and evaporates, flows into the driving module 22 through the first three-way valve 23, absorbs heat from the driving module 22, evaporates once again, and then flows to the fourth branch point 29b.

The second refrigerant 20f that reached the fourth branch point 29b flows into the radiator 21, discharges heat to the outside to be condensed, and then flows into the first pump 25 via the second three-way valve 24, and is extruded by the first pump 25 to flow into the first heat exchange unit 20 again.

Heat exchange is not achieved in the second heat exchange unit 30 where there is no flow of the first refrigerant 10f and the third refrigerant 30f.

In this process, the indoor air is cooled by the first refrigerant 10f that absorbs the heat of the indoor air in the indoor heat exchange unit 10, the driving module 22 is cooled by the second refrigerant 20f that absorbs heat from the driving module 22, and the battery 31 is not cooled/heated because there is no heat exchange with the third refrigerant 30f.

The flow of refrigerant in an indoor space cooling mode will be described with reference to FIG. 6.

In the indoor space cooling mode, the first refrigerant 10f of high temperature and high pressure compressed by the compressor 1 flows into the first heat exchange unit 20 through the switching valve 2, the first expansion valve 11 is operated at an opening degree for expanding the refrigerant, in the state where the second expansion valve 12 is closed. Accordingly, all of the first refrigerant 10f that reached the first branch point 19a flows into the indoor heat exchange unit 10.

The first three-way valve 23 closes the flow path connected to the driving module 22, the second three-way valve 24 closes the flow path connected to the third branch point 29a, and the second pump 35 is operated in a stop state so that the third refrigerant 30f does not flow through the flow path.

The first refrigerant 10f of high temperature and high pressure that passed through the switching valve 2 is condensed by discharging heat to the second refrigerant 20f while passing through the first heat exchange unit 20, and all flows into the first expansion valve 11 after reaching the first branch point 19a.

The first refrigerant 10f flowed into the first expansion valve 11 expands while passing through the first expansion valve 11, flows into the indoor heat exchange unit 10, absorbs heat from indoor air to evaporate, and then flows into the compressor 1 again via the switching valve 2.

The second refrigerant 20f, which is evaporated by absorbing heat from the first refrigerant 10f in the first heat exchange unit 20, flows into the radiator 21 through the first three-way valve 23, discharges heat to the outside to be condensed, and then, flows into the first pump 25 through the second three-way valve 24, and is extruded by the first pump 25 to flow into the first heat exchange unit 20 again.

Heat exchange is not achieved in the second heat exchange unit 30 where there is no flow of the first refrigerant 10f and the third refrigerant 30f.

In this process, the indoor air is cooled by the first refrigerant 10f that absorbs the heat of the indoor air in the indoor heat exchange unit 10, and the driving module 22 and the battery 31 are not cooled/heated because there is no heat exchange with the refrigerant 20f, 30f.

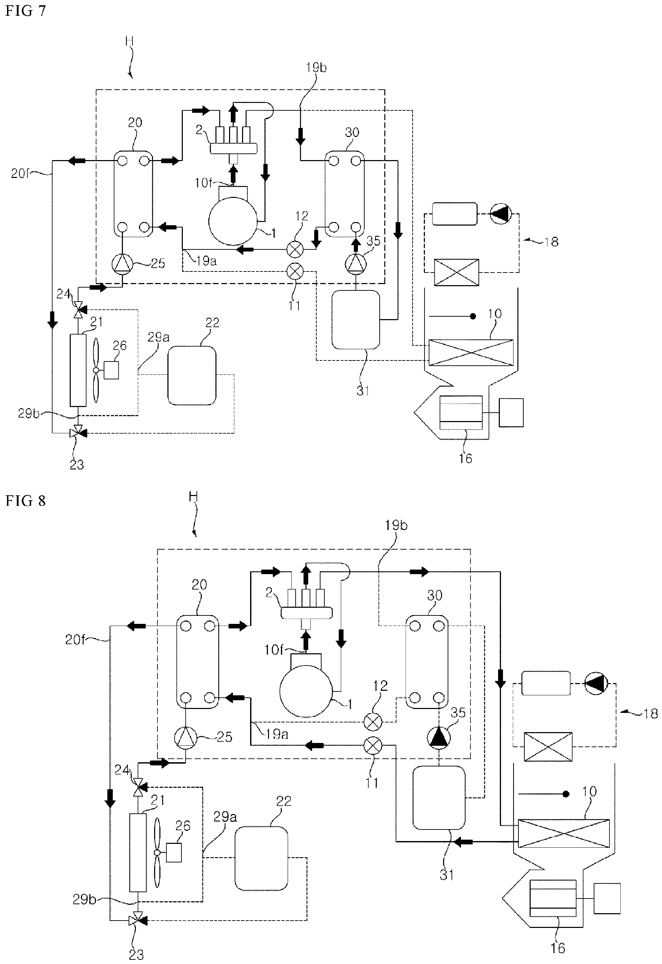

The flow of refrigerant in a preheating mode of the battery 31 will be described with reference to FIG. 7.

In the preheating mode of the battery 31, the first refrigerant 10f of high temperature and high pressure compressed by the compressor 1 passes through the switching valve 2 and the second branch point 19b in order, and then flows into the second heat exchange unit 30. The second expansion valve 12 is operated at an opening degree for expanding the refrigerant in the state where the first expansion valve 11 is closed. Accordingly, all of the first refrigerant 10f that reached the second branch point 19b flows into the second heat exchange unit 30.

The first three-way valve 23 closes the flow path connected to the driving module 22, the second three-way valve 24 closes the flow path connected to the third branch point 29a, and the second pump 35 is operated in a driving state so that the third refrigerant 30f extruded by the second pump 35 flows through the flow path.

The first refrigerant 10f of high temperature and high pressure that passed through the switching valve 2 is condensed by discharging heat to the third refrigerant 30f while passing through the second heat exchange unit 20, and expands while passing through the second expansion valve 12.

The expanded first refrigerant 10f flows into the first heat exchange unit 20, absorbs heat from the second refrigerant 20f to evaporate, and then flows into the compressor 1 again through the switching valve 2.

The second refrigerant 20f condensed by discharging heat to the first refrigerant 10f in the first heat exchange unit 20 flows into the radiator 21 via the first three-way valve 23, absorbs heat from the outside to be evaporated, and then flows into the first pump 25 through the second three-way valve 24, and is extruded by the first pump 25 to flow into the first heat exchange unit 20 again.

The third refrigerant 30f, which is evaporated by absorbing heat from the first refrigerant 10f in the second heat exchange unit 30, flows into the battery 31, discharges heat to the battery 31 to be condensed, and then is extruded by the second pump 35 and flows into the second heat exchange unit 30 again.

In this process, the indoor air is not cooled/heated because there is no heat exchange in the indoor heat exchange unit 10, the driving module 22 is not cooled/heated because there is no heat exchange with the second refrigerant 20f, and the battery 31 is heated due to the third refrigerant 30f that discharges heat to the battery 31.

The flow of refrigerant in an indoor space heating mode will be described with reference to FIG. 8.

In the indoor space heating mode, the first refrigerant 10f of high temperature and high pressure compressed by the compressor 1 sequentially passes through the switching valve 2 and the second branch point 19b and flows into the indoor heat exchange unit 10, and the first expansion valve 11 is operated at an opening degree for expanding the refrigerant, in the state where the second expansion valve 12 is closed. Accordingly, all of the first refrigerant 10f that reached the second branch point 19b flows into the indoor heat exchange unit 10.

The first three-way valve 23 closes the flow path connected to the driving module 22, the second three-way valve 24 closes the flow path connected to the third branch point 29a, and the second pump 35 operates in a stop state so that the third refrigerant 30f does not flow through the flow path.

The first refrigerant 10f of high temperature and high pressure that passed through the switching valve 2 is condensed by discharging heat into the indoor air while passing through the indoor heat exchange unit 10, and expands while passing through the first expansion valve 12.

The expanded first refrigerant 10f flows into the first heat exchange unit 20, absorbs heat from the second refrigerant 20f to be evaporated, and then flows into the compressor 1 again through the switching valve 2.

The second refrigerant 20f condensed by discharging heat to the first refrigerant 10f in the first heat exchange unit 20 flows into the radiator 21 via the first three-way valve 23, absorbs heat from the outside to be evaporated, flows into the first pump 25 via the second three-way valve 24, and is extruded by the first pump 25 to flow into the first heat exchange unit 20 again.

Heat exchange is not achieved in the second heat exchange unit 30 where there is no flow of the first refrigerant 10f and the third refrigerant 30f.

In this process, the indoor air is heated by the first refrigerant 10f that discharges heat to the indoor air in the indoor heat exchange unit 10, and the driving module 22 and the battery 31 are not cooled/heated because there is no heat exchange with the refrigerant 20f, 30f.

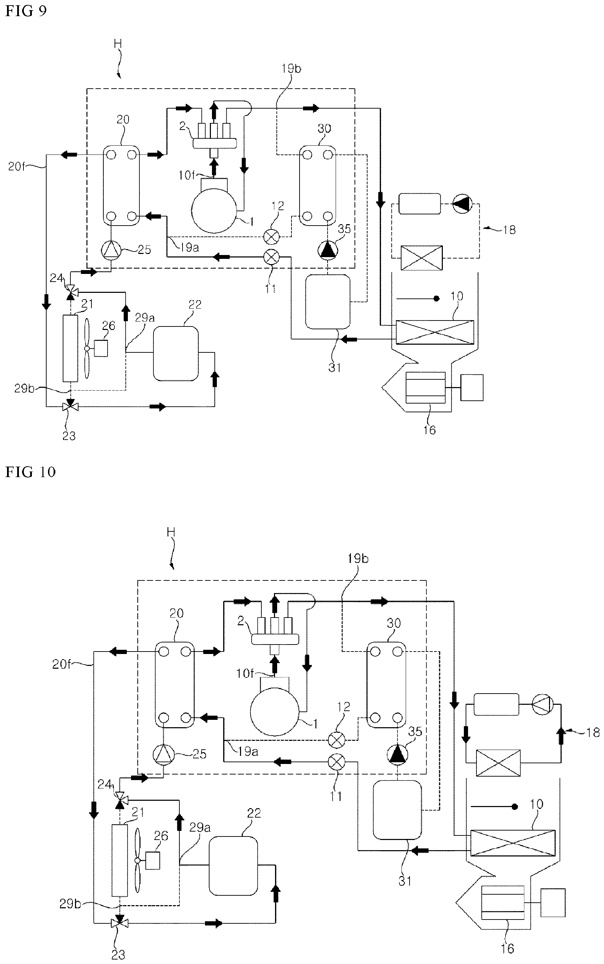

The flow of refrigerant in the indoor air heating mode through waste heat recovery will be described with reference to FIGS. 9 and 10.

In the indoor air heating mode through waste heat recovery, the first refrigerant 10f of high temperature and high pressure compressed by the compressor 1 passes through the switching valve 2 and the second branch point 19b sequentially, and then flows into the indoor heat exchange unit 10, and the first expansion valve 11 is operated at an opening degree for expanding the refrigerant in the state where the second expansion valve 12 is closed. Accordingly, all of the first refrigerant 10f that reached the second branch point 19b flows into the indoor heat exchange unit 10.

The first three-way valve 23 closes the flow path connected to the fourth branch point 29b, the second three-way valve 24 closes the flow path connected to the radiator 21, and the second pump 35 is operated in a stop state so that the third refrigerant 30f does not flow through the flow path.

The first refrigerant 10f of high temperature and high pressure that passed through the switching valve 2 is condensed by discharging heat to the indoor air while passing through the indoor heat exchange unit 10, and expands while passing through the first expansion valve 12. At this time, an indoor heater 18 disposed in the indoor space is driven to increase the amount of heat discharged to the indoor air.

The expanded first refrigerant 10f flows into the first heat exchange unit 20, absorbs heat from the second refrigerant 20f to be evaporated, and then flows into the compressor 1 again via the switching valve 2.

The second refrigerant 20f condensed by discharging heat to the first refrigerant 10f in the first heat exchange unit 20 flows into the driving module 22 via the first three-way valve 23, absorbs heat from the driving module 22 to be evaporated, and then flows into the third branch point 29a.

The second refrigerant 20f that reached the third branch point 29a flows into the second three-way valve 24 and is extruded by the first pump 25 to flow into the first heat exchange unit 20 again.

Heat exchange is not achieved in the second heat exchange unit 30 where there is no flow of the first refrigerant 10f and the third refrigerant 30f.

In this process, the indoor air is heated by the first refrigerant 10f that discharges heat to the indoor air in the indoor heat exchange unit 10, the driving module 22 is cooled by the second refrigerant 20f that absorbs heat from the driving module 22, and the battery 31 is not cooled/heated because there is no heat exchange with the third refrigerant 30f. At this time, it is possible to increase the efficiency of indoor air heating by recovering the waste heat generated by the driving of the driving module 22, and when high-load heating is required, the indoor heater 18 disposed in the room is driven to supply heat to the indoor space.

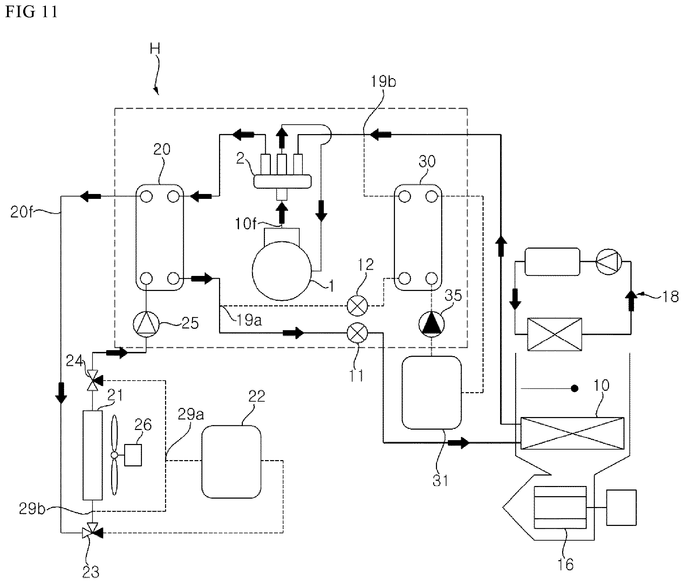

The flow of refrigerant in a defrost mode will be described with reference to FIG. 11.

In the defrost mode, the first refrigerant 10f of high temperature and high pressure compressed by the compressor 1 flows into the first heat exchange unit 20 through the switching valve 2, and the first expansion valve 11 is operated at an opening degree for expanding the refrigerant in a state where the second expansion valve 12 is closed. Accordingly, all of the first refrigerant 10f that reached the first branch point 19a flows into the indoor heat exchange unit 30.

The first three-way valve 23 closes the flow path connected to the driving module 22, the second three-way valve 24 closes the flow path connected to the third branch 29a, and the second pump 35 is operated in a stop state so that the third refrigerant 30f does not flow through the flow path.

The first refrigerant 10f of high temperature and high pressure that passed through the switching valve 2 is condensed by discharging heat to the second refrigerant 20f while passing through the first heat exchange unit 20, and reaches the first branch point 19a and then flows into the first expansion valve 11.

The first refrigerant 10f flowed into the first expansion valve 11 expands while passing through the first expansion valve 11, flows into the indoor heat exchange unit 10, absorbs heat from indoor air to be evaporated, and then flows into the compressor 1 again via the switching valve 2. At this time, the indoor heater 18 disposed in the indoor space is driven to supply heat to the room.

The second refrigerant 20f, which is evaporated by absorbing heat from the first refrigerant 10f in the first heat exchange unit 20, flows into the radiator 21 via the first three-way valve 23, discharges heat to the outside to be condensed, flows into the first pump 25 via the second three-way valve 24, and is extruded by the first pump 25 to flow into the first heat exchange unit 20 again.

Heat exchange is not achieved in the second heat exchange unit 30 where there is no flow of the first refrigerant 10f and the third refrigerant 30f.

In this process, the indoor air may be cooled by the first refrigerant 10f absorbing the heat of the indoor air in the indoor heat exchange unit 10, and may be supplied with heat from the indoor heater 18 disposed in the indoor space, and the driving module 22 and the battery 31 are not cooled/heated because there is no heat exchange with the refrigerant 20f, 30f. In addition, the radiator 21 may defrost frost implanted in the radiator 21 using heat discharged from the second refrigerant 20f.

According to the heat pump device of the electric vehicle of the present disclosure has one or more of the following effects.

First, as the indoor space, the battery, and the driving module connected to the heat pump device are configured in an independent refrigerant cycle respectively, independent heating and cooling can be achieved.

Second, the efficiency of defrosting operation and battery preheating in winter can be increased.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A heat pump device for an electric vehicle comprising:
a compressor (1) to compress a first fluid (10f);
an indoor heat exchanger (10) coupled to the compressor, and through which the first fluid flows;
a first heat exchanger (20) coupled to the indoor heat exchanger and the compressor, and through which the first fluid flows;
a first expansion valve (11) to expand the first fluid flowing between the indoor heat exchanger and the first heat exchanger; and
a second heat exchanger (30) disposed at a flow path branched from a flow path between the compressor and the indoor heat exchanger and branched from a flow path between the first heat exchanger and the first expansion valve,
wherein the first heat exchanger (20) heat-exchanges the first fluid (10f) with a second fluid (20f) selectively flowed to at least one of a radiator (21) and a driving module (22), and
the second heat exchanger (30) heat-exchanges the first fluid (10f) with a third fluid (30t) selectively flowed to a battery (31).

2. The heat pump device of claim 1, wherein the radiator (21) is coupled to the first heat exchanger (20) and forms a closed loop through which the second fluid (20f) flows.

3. The heat pump device of claim 2, further comprising a first three-way valve (23) disposed at an inlet side of the radiator (21) and a second three-way valve (24) disposed at an outlet side of the radiator (21), which are disposed at the closed loop, and
the driving module (22) is coupled to the first three-way valve (23) and the second three-way valve (24).

4. The heat pump device of any one of claims 1 to 3, further comprising a second expansion valve (12) disposed between the first heat exchanger (20) and the second heat exchanger (30), and wherein the battery (31) is coupled to the second heat exchanger (30) to form a closed loop through which the third fluid (30f) flows.

5. The heat pump device of claim 4, wherein the second expansion valve (12) is disposed at a flow path formed from the second heat exchanger (30) and branched from a flow path between the first heat exchanger (20) and the first expansion valve (11).

6. The heat pump device of any one of claims 1 to 5, further comprising a switching valve (2) coupled to the compressor (1), the indoor heat exchanger (10), and the first heat exchanger (20).

7. The heat pump device of any one of claims 1 to 6, further comprising a pump (35) disposed between the battery (31) and the second heat exchanger (30) and extruding the third fluid (30f).

8. The heat pump device of any one of preceding claims, wherein the battery (31) is selectively cooled or heated according to a flow of the first fluid (10f).

9. The heat pump device of claim 8, further comprising a second expansion valve (12) disposed between the first heat exchanger (20) and the second heat exchanger (30), and wherein the battery (31) is coupled to the second heat exchanger (30) to form a closed loop through which the third fluid (30t) flows.

10. The heat pump device of claim 9, wherein the battery (31) is cooled when the first fluid (10f) flows from the second expansion valve (12) to the second heat exchanger (30), and is heated when the first fluid (10f) flows from the second heat exchanger (30) to the second expansion valve (12).

11. The heat pump device of any one of claims 8 to 10, wherein the first heat exchanger (20) heat-exchanges the first fluid (10f) with a second fluid (20f) selectively flowed to at least one of a radiator (21) and a driving module (22).

12. The heat pump device of claim 11, wherein the radiator (21) is coupled to the first heat exchanger (20) to form a closed loop through which the second fluid (20f) flows.

13. The heat pump device of any one of claims 11 to 12, wherein the second fluid (20f) absorbs heat from the first fluid (10f) in the first heat exchanger (20), and discharges heat from the radiator (21) to an outside environment.

14. The heat pump device of any one of claims 11 to 13, further comprising a first three-way valve (23) disposed at an inlet side of the radiator (21), and a second three-way valve (24) disposed at an outlet side of the radiator (21), and
the driving module (22) is coupled to the first three-way valve (23) and the second three-way valve (24).

15. The heat pump device of any one of claims 1 to 14, wherein the indoor heat exchanger (10) comprises a heater (18) to supply heat to an interior of an electric vehicle.
